# EUROPÄISCHE PATENTANMELDUNG

(11) **EP 0 657 195 A1**
(43) Veröffentlichungstag der Anmeldung: **14.06.1995**
(21) Anmeldenummer: 94890205.1
(22) Anmeldetag: 09.12.1994
(51) Int. Cl.: B01D 17/00, B01D 21/02, B01D 17/028, C02F 1/40

(54) **Schlamm- und Ölabscheider**

(30) Priorität: 13.12.1993 AT 2509/93
(71) Anmelder: RAT Rieder Abwassertechnik Ges. m.b.H., A-5431 Kuchl (AT)
(72) Erfinder: Ofner, Ing. Hubert, A-8413 St. Georgen/Stiefing (AT)
(74) Vertreter: Hübscher, Heiner, Dipl.-Ing.

(57) **Zusammenfassung**

Ein Schlamm- und Ölabscheider (1) für Abwasser besteht aus einem Abscheiderbecken (2), in dem von einem einen Zulauf (4) aufweisenden Grobabscheideraum (3) durch einen Überlauf (7) ein eine Plattenabscheideeinrichtung (18) mit mehreren übereinander angeordneten Abscheideplatten (19) aufweisender Feinabscheideraum (6) abgetrennt ist, wobei vom Feinabscheideraum (6) in Strömungsrichtung hinter der Plattenabscheideeinrichtung (18) ein Ablauf (9) ausgeht.

Um auf rationelle und wartungsfreundliche Weise den Abscheideeffekt steigern zu können, ist der Feinabscheideraum (6) in zwei durch einen Strömungskanal (14) miteinander verbundene Kammern, eine vordere Ölabscheidekammer (10) und eine hintere Ablaufkammer (11) unterteilt, führt der Strömungskanal (14) abwärts und nimmt die Plattenabscheideeinrichtung (18) auf und besitzt die Plattenabscheideeinrichtung (18) schräg abwärts verlaufende, oberhalb eines als Feinschlammfang dienenden Bodenteiles (16) endende Abscheideplatten (19).

## Beschreibung

Die Erfindung bezieht sich auf einen Schlamm- und Ölabscheider für Abwasser, bestehend aus einem Abscheiderbecken, in dem von einem einen Zulauf aufweisenden Grobabscheideraum durch einen Überlauf ein eine Plattenabscheideeinrichtung mit mehreren übereinander angeordneten Abscheideplatten aufweisender Feinabscheideraum abgetrennt ist, wobei vom Feinabscheideraum in Strömungsrichtung hinter der Plattenabscheideeinrichtung ein Ablauf ausgeht.

Um mit Feststoff- und Leichtflüssigkeitsteilchen angereichertes Abwasser reinigen zu können, gibt es bereits Schlamm- und Ölabscheider, die das Abwasser sowohl von den Feststoffteilchen als auch von den Leichtflüssigkeitsteilchen befreien sollen. Dazu wird in einem Abscheiderbecken neben einem Grobabscheideraum ein Feinabscheideraum eingerichtet, in dem eine Plattenabscheideeinrichtung zur Abscheidung der noch vorhandenen Feststoff- und Leichtflüssigkeitsteilchen vorgesehen ist. Die bekannten Abscheider weisen dazu horizontal übereinander angeordnete Wellplatten als Abscheideplatten auf, die in den Scheitelbereichen der Wellenberge Durchströmöffnungen für die Leichtflüssigkeitsteilchen besitzen. Aus dem quer zu den Wellprofilen strömenden Abwasser setzen sich die Ölteilchen in den oberen Scheitelbereichen und die Feststoffteilchen in den unteren Scheitelbereichen der Wellplatten ab, so daß sich die Durchströmwege vor allem bei verschmutzterem Wasser recht schnell verlegen und diese Plattenabscheider äußerst wartungsintensiv sind. Dazu kommt noch, daß die abgeschiedenen Ölteilchen durch die Durchströmöffnungen von einer Wellplatte zur anderen wandern müssen, um auf die Wasseroberfläche aufschwimmen zu können, was den Abscheideeffekt stark beeinträchtigt. Außerdem läßt sich das abgeschiedene Öl und das gereinigte Abwasser nur unzureichend über ein im Bereich des Plattenabscheiders vorgesehenes Überlaufwehr voneinander trennen, was zur Gefahr einer neuerlichen Verschmutzung des Ablaufwassers führt. Darüber hinaus benötigt der ganze Abscheider wegen der großräumigen Plattenabscheideeinrichtung trotz seines geringen Wirkungsgrades viel Platz und baut relativ aufwendig.

Der Erfindung liegt daher die Aufgabe zugrunde, diese Mängel zu beseitigen und einen Schlamm- und Ölabscheider der eingangs geschilderten Art zu schaffen, der sich durch seine kompakte Bauweise und vor allem durch seinen hervorragenden Wirkungsgrad sowohl hinsichtlich der Schlammabscheidung als auch hinsichtlich der Ölabscheidung bei gleichzeitiger Wartungsfreundlichkeit auszeichnet.

Die Erfindung löst diese Aufgabe dadurch, daß der Feinabscheideraum in zwei durch einen Strömungskanal miteinander verbundene Kammern, eine vordere Ölabscheidekammer und eine hintere Ablaufkammer, unterteilt ist, daß der Strömungskanal von der Ölabscheidekammer abwärts zur Ablaufkammer führt und die Plattenabscheideeinrichtung aufnimmt und daß die Plattenabscheideeinrichtung schräg abwärts verlaufende, oberhalb eines als Feinschlammfang dienenden Bodenteils endende Abscheideplatten besitzt. Das im Grobabscheideraum schwerkraftbedingt durch Sedimentation der Sinkstoffe, wie Sand, Schlamm, Kies u. dgl., vorgereinigte Abwasser gelangt durch den Überlauf in die vordere Kammer des Feinabscheideraumes, der Ölabscheidekammer, in der durch den Einfluß der Schwerkraft die Abscheidung der Feststoffteilchen und der Leichtflüssigkeitsteilchen fortgesetzt wird, wobei die Leichtflüssigkeitsteilchen aufzuschwimmen beginnen. Das Abwasser strömt dabei durch die Ölabscheidekammer der Plattenabscheideeinrichtung im Strömungskanal zu, deren schräg gerichtete Abscheideplatten dann eine weitgehende Reinigung des Wassers von den restlichen Feststoffen und Leichtflüssigkeitsteilchen gewährleisten. Innerhalb der Plattenabscheideeinrichtung treffen die Teilchen auf die geneigten Platten auf und scheiden sich ab, wobei die Leichtflüssigkeitsteilchen jeweils an den Unterseiten der Platten entgegen der Strömungsrichtung hochsteigen und wiederum in der Ölabscheidekammer aufschwimmen, die Feststoffteilchen hingegen an den jeweiligen Oberseiten der Platten absinken, sich in Strömungsrichtung abwärtsbewegen und am als Feinschlammfang vorgesehenen Bodenteil absetzen. Trotz der hohen Abscheidewirkung kommt es dadurch zu einem Selbstreinigungseffekt der Plattenabscheideeinrichtung und die Abscheideplatten bleiben auch während längerer Betriebsdauer weitgehend sauber. Die aufschwimmenden Ölteilchen werden an der Wasseroberfläche der Ölabscheidekammer, die auch als Ölsammelraum dient, gesammelt und bedarfsweise entsorgt. Ähnliches gilt für die sich auf den Bodenteil absetzenden Feststoffteilchen, die bei Erreichen einer entsprechenden Füllung des durch den Bodenteil gegebenen Feinschlammfanges entfernt werden. Das aus der Plattenabscheideeinrichtung ausströmende Abwasser gelangt weitgehend gereinigt in die Ablaufkammer, wo sich noch die letzten Feststoffteilchen absetzen können, und gelangt über ein oberes Uberströmrohr od. dgl. in den Ablauf. Es ist eine voneinander getrennte Feinschlamm- und Ölabscheidung mit hohem Reinigungsgrad gewährleistet, wobei durch die Selbstreinigungswirkung des Plattenabscheiders eine einfache Wartung und ein wirtschaftlicher Dauerbetrieb möglich sind.

Die Unterteilung des Feinabscheideraumes in die Ölabscheide- und Ablaufkammer könnte durchaus mit Hilfe von geeigneten Trennwänden des Abscheiderbeckens erfolgen, vorteilhaft ist es aber, wenn die Kammern schachtförmig ausgebildet sind und über den Strömungskanal bodenseitig ineinander übergehen, wobei die Ölabscheidekammer von einer oberen, mit ihren Einströmrändern den Überlauf bildenden Einströmöffnung abwärts zum Strömungskanal führt und die aufwärts führende Ablaufkammer an den Strömungskanal und den Bodenteil anschließt. Die Schachtbauweise der Kammern gewährleistet eine optimale Strömungsführung des Abwassers während des Abscheidevorganges und vermeidet das Entstehen von Toträumen, was auch bei hoher Durchsatzleistung zu einem ausgezeichneten Abscheidegrad führt. Dazu kommt noch, daß durch die Schachtausbildung eine sehr kompakte Bauweise des Feinabscheideraumes möglich ist und sich auf verhältnismäßig platzsparende Weise eine hochwirksame Schlamm- und Ölabscheidung erreichen läßt.

Verlaufen die Abscheideplatten unter einem etwa 60°igen Winkel abwärts, ergibt sich eine Plattenschräge, die bei gesteigertem Selbstreinigungseffekt beste Wirkungsgrade für die Abscheidung von Leichtflüssigkeits- und Feststoffteilchen gewährleistet.

Nimmt die Ölabscheidekammer im Höhenbereich der Einströmöffnung innerhalb der Einströmränder eine zu einem Ölableitrohr führende Ölglocke auf, das in einem Ölsammelraum mündet, können die abgeschiedenen Ölteilchen auch schon in geringen Mengen aus der Ölabscheidehammer abgezogen und in einen geeigneten Ölsammelraum abgeleitet werden, was die Ölsammelkapazität vergrößert und die Wartungsfreundlichkeit steigert.

Um durch diesen Ölsammelraum nicht unnötigen Platz verschwenden zu müssen, kann der Ölsammelraum vorteilhafterweise zwischen Ölabscheidekammer und Ablaufkammer vorgesehen sein.

Gemäß einer weiteren Ausgestaltung der Erfindung bildet der Feinabscheideraum eine Baueinheit, die im Abscheiderbecken mit ihrer Einströmöffnung etwa diametral zum Zulauf für den Grobabscheideraum eingesetzt ist. Dadurch wird nicht nur die Herstellung und Installation des Abscheiders wesentlich vereinfacht, sondern auch für einen Grobabscheideraum mit einer ausreichend großen Beruhigungszone für die Grobabscheidung gesorgt. In dieser erfolgt die Sedimentation der schwereren Feststoffteilchen, die dabei durch die aufwärts gerichtete Strömung des Abwassers, die sich auf Grund des als Tauchrohr vorgesehenen Zulaufes und des Überlaufes über die Einströmränder des Feinabscheideraumes ergibt, begünstigt wird. Die entsprechend groß bemessene Einströmöffnung des Feinabscheideraumes führt zu einer Verringerung der Fließgeschwindigkeit von unten nach oben, wodurch die noch nicht sedimentierten Teilchen so lange aufwärts mitgenommen werden, bis die Strömungsgeschwindigkeit des Abwassers gerade ihrer Sinkgeschwindigkeit entspricht und sich eine schwebende Feststoffteilchenschicht bildet, die für kleinere dispergierte Teilchen als Filter wirkt. Der Filtervorgang führt zu größeren Partikeln, die sich dann entgegen der Fließrichtung absetzen können. Es kommt zu einer sehr wirkungsvollen Vorreinigung des Abwassers, das anschließend in den Kammern des Feinabscheideraumes weitergereinigt wird.

Weist der Zulauf eine schwimmerbetätigbare Absperrvorrichtung auf, deren Schwimmer an einer Ölüberlaufleitung des Ölsammelraumes angeschlossen und mit einem als Überstausicherung ausgebildeten Entlüftungsrohr versehen ist, entsteht eine sehr einfache Sicherheitseinrichtung, die sowohl bei einer Überfüllung des Ölsammelraumes als auch bei einem übermäßigen Anstieg des Wasserspiegels im Abscheiderbecken den Zulauf sofort unterbricht und umweltgefährdende Betriebsstörungen des Abscheiders vermeidet.

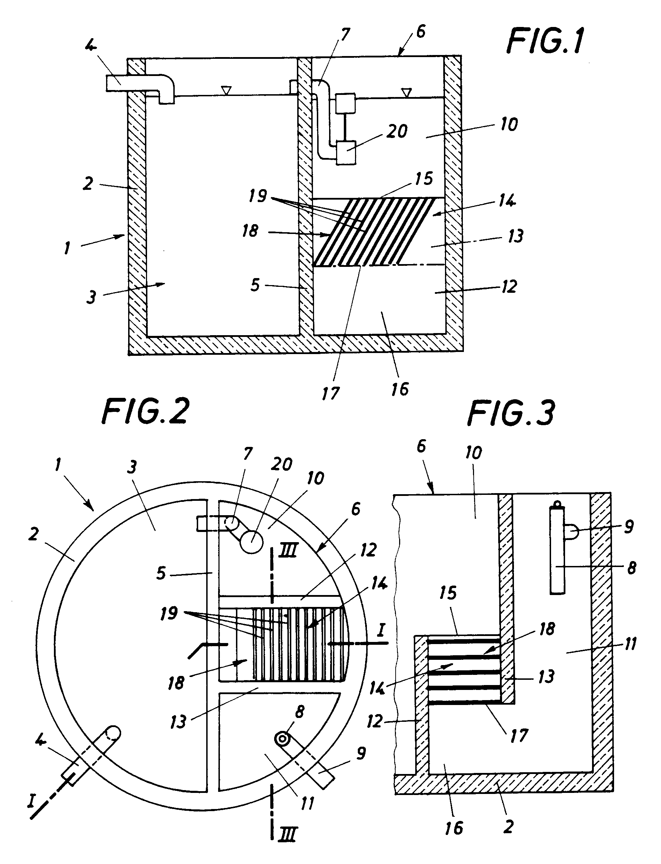

In der Zeichnung ist der Erfindungsgegenstand beispielsweise veranschaulicht, und zwar zeigen
- Fig. 1: einen erfindungsgemäßen Schlamm- und Ölabscheider ohne Deckel im Vertikalschnitt nach der Linie I-I der Fig. 2,
- Fig. 2: diesen Abscheider in Draufsicht und
- Fig. 3: einen Querschnitt nach der Linie III-III der Fig. 2 sowie die
- Fig. 4 und 5: ein weiteres Ausführungsbeispiel eines erfindungsgemäßen Schlamm- und Ölabscheiders im Vertikalschnitt nach der Linie IV-IV der Fig. 5 bzw. in Draufsicht bei abgehobenem Deckel.

Ein Schlamm- und Ölabscheider 1 besteht aus einem zylinderischen Abscheiderbecken 2, das einen Grobabscheideraum 3 mit einem Tauchrohr als Abwasserzulauf 4 bildet. Vom Grobabscheideraum 3 ist über eine Trennwand 5 ein Feinabscheideraum 6 abgetrennt, der einerseits über einen Überlauf 7 an den Grobabscheideraum 3 und anderseits über ein Tauchrohr 8 an einen Ablauf 9 angeschlossen ist. Der Feinabscheideraum 6 ist in eine überlaufseitige Ölabscheidekammer 10 und eine ablaufseitige Ablaufkammer 11 unterteilt, wobei zwischen den beiden Trennwänden 12, 13 ein Strömungskanal 14 zur Strömungsverbindung der beiden Kammern 10, 11 vorgesehen ist.

Die überlaufseitige Trennwand 12 erstreckt sich dabei vom Boden aufwärts bis zur Einströmöffnung 15 des Strömungskanals 14 und die ablaufseitige Trennwand 13 erstreckt sich mit Abstand oberhalb des Bodenteils 16 von der Mündungsöffnung 17 des Strömungskanals 14 bis zum oberen Randbereich des Abscheiderbeckens 2. Dadurch entsteht ein aus der Ölabscheidekammer 10 abwärts in die Ablaufkammer 11 führender Strömungskanal 14, der eine Plattenabscheideeinrichtung 18 aus einzelnen mit Abstand voneinander angeordneten, schräg abwärts verlaufenden Abscheiderplatten 19 aufnimmt.

Zu reinigendes Abwasser gelangt über den Zulauf 4 in den Grobabscheideraum 3, in dem sich die gröberen Feststoffteilchen absetzen und es zu einer Vorreinigung kommt. Dieses vorgereinigte Abwasser strömt dann über den Überlauf 7 in den Feinabscheideraum 6, wo es zuerst in die Ölabscheidekammer 10 gelangt. Hier wird die Sedimentation der Feststoffteilchen fortgesetzt und die Ölabscheidung begonnen, wobei ausgeschiedene Ölteilchen aufschwimmen, so daß der Raum oberhalb des Wasserspiegels in der Ölabscheidekammer als Ölsammelraum dient. Das Abwasser dringt dann über die Einströmöffnung 15 in den Strömungskanal 14 ein und strömt durch diesen in die anschließende Ablaufkammer 11. Dabei muß es aber durch die schräg abwärts führenden Abscheideplatten 19 der Abscheideeinrichtung 18 hindurchströmen, wo die Restölabscheidung und die endgültige Feinstoffabscheidung erfolgt. Durch das Abwärtsströmen des Wassers entlang der Abscheideplatten kommt es zur Trennung von Ölteilchen und Feststoffteilchen, welche Teilchen sich gewichtsbedingt einerseits an den Unterseiten anderseits an den Oberseiten der Abscheideplatten absondern. Die Ölteilchen wandern dann entgegen der Strömungsrichtung aufwärts in die Ölabscheidekammer zurück, während die Feststoffteilchen mit der Strömung abwärts wandern und auf den als Feinschlammfang dienenden Bodenteil 16 unterhalb der Mündungsöffnung 17 des Strömungskanals absinken. Das gereinigte Wasser steigt in der Ablaufkammer hoch und gelangt über das Tauchrohr 8 in den Ablauf 9, wobei das Tauchrohr 8 gleichzeitig auch als Probeentnahmeschacht ausgebildet sein kann.

Der Überlauf 7 ist mit einem Schwimmerventil 20 als Ölsperre ausgestattet, so daß ab einer bestimmten Grenzhöhe des Ölstandes der Abwasserzulauf gestoppt wird und für eine Ölentsorgung gesorgt werden kann.

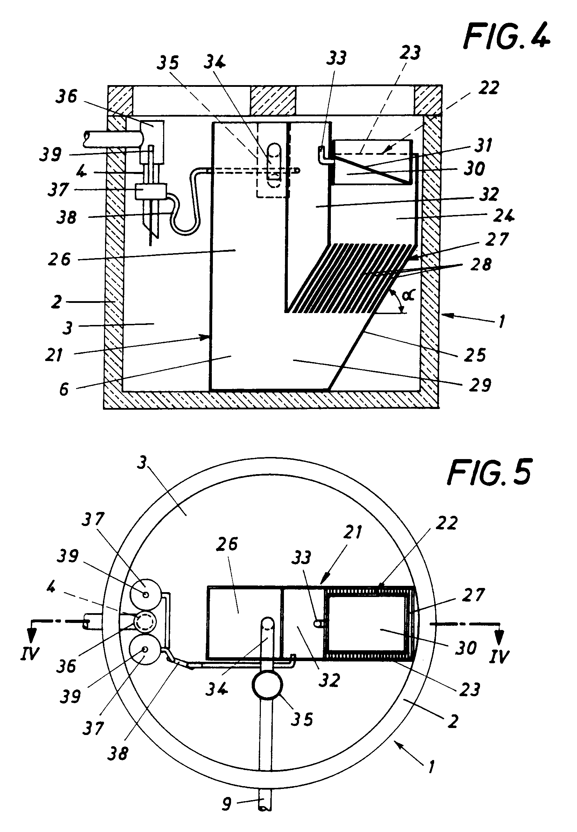

Gemäß dem Ausführungsbeispiel nach Fig. 4 und 5 ist in das zylindrische Abscheiderbecken 2 des Abscheiders 1 eine Baueinheit 21 als Feinabscheideraum 6 eingesetzt, die über eine Einströmöffnung 22 mit dem verbleibenden Beckenbereich, der den Grobabscheideraum 3 bildet, in Strömungsverbindung steht, wobei die Einströmränder 23 der Einströmöffnung 22 einen Überlauf bilden. Der Feinabscheideraum 6 setzt sich aus einer von der Einströmöffnung 22 abwärts führenden schachtförmigen Ölabscheidekammer 24, einem daran anschließenden Strömungskanal 25 und einer wieder aufwärts führenden Ablaufkammer 26 zusammen, wobei im Strömungskanal 25 eine Plattenabscheideeinrichtung 27 mit parallel übereinander angeordneten, aber unter einem Winkel α von etwa 60° schräg abwärts führenden Abscheideplatten 28 eingesetzt ist. Diese Abscheideplatten 28 enden oberhalb des als Feinschlammfang dienenden Bodenteils 29 und der Strömungskanal 25 kann der Plattenschräge entsprechend gegenüber der Ölabscheidekammer 24 abgewinkelt sein.

Im Bereich der Einströmöffnung 22 ist innerhalb der Einströmränder 23 eine Ölglocke 30 vorgesehen, die mit einer schräg aufwärts führenden Glockendecke 31 zu einem aus der Ölabscheidekammer 24 in einen Ölsammelraum 32 führenden Ölableitrohr 33 führt, wobei der Ölsammelraum 32 zwischen der Abscheidekammer 24 und der Ablaufkammer 26 innerhalb der Baueinheit 21 angeordnet ist.

Von der Ablaufkammer 26 geht im oberen Bereich ein Überströmrohr 34 aus, das über einen Probenahmebehälter 35 in den Ablauf 9 mündet.

Dem Zulauf 4 ist eine Absperrvorrichtung 36 zugeordnet, die über Schwimmer 37 betätigt werden kann, wobei an die Schwimmer 37 eine vom Ölsammelraum 32 ausgehende Ölüberlaufleitung 38 angeschlossen ist und die Schwimmer 37 außerdem mit einem innerhalb des Abscheiderbeckens 2 endenden Entlüftungsrohr 39 als Überstausicherung versehen sind.

Die Baueinheit 21 ist im wesentlichen prismatisch ausgebildet und auf den Zulauf 4 hin ausgerichtet, so daß sich der Zulauf 4 einerseits und die Einströmöffnung 22 anderseits im Abscheiderbecken 2 diametral gegenüberliegen.

Auch hier gelangt zu reinigendes Abwasser über den Zulauf 4 in den Grobabscheideraum 3, in dem sich die gröberen Feststoffteilchen absetzen, wobei die Sedimentation der Stoffteilchen durch die von der Mündung des Tauchrohres nach oben zur Einströmöffnung 22 hin gerichteten, sich auf Grund der Strömungsquerschnitte verlangsamenden Strömung unterstützt wird. Das im Grobabscheideraum 3 vorgereinigte Abwasser strömt dann über die Einströmränder 23 der Einströmöffnung 22 in die Ölabscheidekammer 24 des Feinabscheideraumes 6, wo auf dem Weg zur Plattenabscheideeinrichtung 27 die Ölabscheidung einsetzt. Zur Restölabscheidung und Feinststoffabscheidung dient anschließend die Plattenabscheideeinrichtung 27, in der sich entlang der Abscheideplatten 28 die Ölteilchen abscheiden und nach oben steigen, die Feststoffteilchen hingegen absetzen und absinken. Die Ölteilchen schwimmen auf, gelangen in die Ölglocke 30 und von dort über das Ölableitrohr 33 in den Ölsammelraum 32. Die Feststoffteilchen sinken durch die Plattenabscheideeinrichtung 27 hindurch in den Bodenteil 29 ab und werden hier als Feinschlamm gesammelt. Das so gereinigte Abwasser steigt in der Ablaufkammer 26 hoch und wird über das Überströmrohr 34 abgezogen.

Ist der Ölsammelraum 32 voll, dringt Öl durch die Ölüberlaufleitung 38 in die Schwimmer 37, die damit absinken und den Zulauf 4 sperren. Steigt das Abwasser im Abscheiderbecken 2 zu stark an, dringt dieses Wasser in das Entlüftungsrohr 39 und schließt dadurch ebenfalls den Zulauf 4, so daß Betriebsstörungen weitgehend vermieden werden können.

Es entsteht ein raumsparender, aufwandsarmer, wartungsfreundlicher und dennoch hochwirksamer Schlamm- und Ölabscheider.

## Patentansprüche

1. Schlamm- und Ölabscheider (1) für Abwasser, bestehend aus einem Abscheiderbecken (2), in dem von einem einen Zulauf (4) aufweisenden Grobabscheideraum (3) durch einen Überlauf (7) ein eine Plattenabscheideeinrichtung (18) mit mehreren übereinander angeordneten Abscheideplatten (19) aufweisender Feinabscheideraum (6) abgetrennt ist, wobei vom Feinabscheideraum (6) in Strömungsrichtung hinter der Plattenabscheideeinrichtung (18) ein Ablauf (9) ausgeht, dadurch gekennzeichnet, daß der Feinabscheideraum (6) in zwei durch einen Strömungskanal (14, 25) miteinander verbundene Kammern, eine vordere Ölabscheidekammer (10, 24) und eine hintere Ablaufkammer (11, 26) unterteilt ist, daß der Strömungskanal (14, 25) von der Ölabscheidekammer (10, 24) abwärts zur Ablaufkammer (11, 26) führt und die Plattenabscheideeinrichtung (18, 27) aufnimmt und daß die Plattenabscheideeinrichtung (18, 27) schräg abwärts verlaufende, oberhalb eines als Feinschlammfang dienenden Bodenteils (16, 29) endende Abscheideplatten (19, 28) besitzt.

2. Schlamm- und Ölabscheider nach Anspruch 1, dadurch gekennzeichnet, daß die Kammern (24, 26) schachtförmig ausgebildet sind und über den Strömungskanal (25) bodenseitig ineinander übergehen, wobei die Ölabscheidekammer (24) von einer oberen, mit ihren Einströmrändern (23) den Überlauf bildenden Einströmöffnung (22) abwärts zum Strömungskanal (25) führt und die aufwärts führende Ablaufkammer (26) an den Strömungskanal (25) und den Bodenteil (29) anschließt.

3. Schlamm- und Ölabscheider nach Anspruch 1 oder 2, dadurch gekennzeichnet, daß die Abscheideplatten (19, 28) unter einem etwa 60°igen Winkel abwärts verlaufen.

4. Schlamm- und Ölabscheider nach Anspruch 2 oder 3,dadurch gekennzeichnet, daß die Ölabscheidekammer (24) im Höhenbereich der Einströmöffnung (22) innerhalb der Einströmränder (23) eine zu einem Ölableitrohr (33) führende Ölglocke (30) aufnimmt, das in einen Ölsammelraum (32) mündet.

5. Schlamm- und Ölabscheider nach einem der Ansprüche 2 bis 4, dadurch gekennzeichnet, daß der Ölsammelraum (32) zwischen Ölabscheidekammer (24) und Ablaufkammer (26) vorgesehen ist.

6. Schlamm- und Ölabscheider nach Anspruch 5, dadurch gekennzeichnet, daß der Feinabscheideraum (6) eine Baueinheit (21) bildet, die im Abscheiderbecken (2) mit ihrer Einströmöffnung (22) etwa diametral zum Zulauf (4) für den Grobabscheideraum (3) eingesetzt ist.

7. Schlamm- und Ölabscheider nach einem der Ansprüche 1 bis 6, dadurch gekennzeichnet, daß der Zulauf (4) eine schwimmerbetätigbare Absperrvorrichtung (36) aufweist, deren Schwimmer (37) an einer Ölüberlaufleitung (38) des Ölsammelraumes (32) angeschlossen und mit einem als Überstausicherung ausgebildeten Entlüftungsrohr (39) versehen ist.
